# EUROPÄISCHE PATENTSCHRIFT

(11) **EP 0 863 302 B1**
(45) Veröffentlichungstag und Bekanntmachung des Hinweises auf die Patenterteilung: **12.12.2001**
(21) Anmeldenummer: 98101656.1
(22) Anmeldetag: 31.01.1998
(51) Int. Cl.: F02F 3/00, F02B 75/24, F16J 9/08, F16J 9/24

(54) **Brennkraftmaschine mit einem liegenden Zylinder**
Internal combustion engine with horizontal cylinders
Moteur à combustion interne avec cylindres horizontaux

(30) Priorität: 05.03.1997 DE 19708892
(43) Veröffentlichungstag der Anmeldung: 09.09.1998
(73) Patentinhaber: Dr.Ing.h.c. F. Porsche Aktiengesellschaft, 70435 Stuttgart (DE)
(72) Erfinder: Kling, Jürgen, 75446 Wiernsheim (DE)

(56) Entgegenhaltungen:
- EP-A- 0 351 976
- DE-A- 2 542 803
- FR-A- 719 659
- P.DE K.DYKES: "PRESSURE-PACKED PISTON RINGS" 1.Dezember 1951 , THE MOTOR INDUSTRY RESEARCH ASSOCIATION , BRENTFORD,MIDDLESEX,GB XP002064875 * Abbildung 26 * * Seite 21, Spalte 2, Absatz 2 - Absatz 6 *
- ING.(GRAD) E.SRASSER: "KOLBENGESTALTUNG FÜHR NIEDRIGEN ÖLVERBRAUCH." 17.Mai 1979 , KS-KOLLOQUIM , NECKARSULM XP002064876 14 * Abbildungen 12,13 * * Seite 7, Spalte 2, Absatz 8 *

## Beschreibung

Die Erfindung betrifft eine Brennkraftmaschine nach der Gattung des Hauptanspruches, mit mindestens einem Zylinder, dessen Zylinderachse in Einbaulage zumindest annähernd horizontal verläuft.

Eine derartige Brennkraftmaschine ist aus der DE 25 42 803 C2 bekannt. Um eine in Abhängigkeit bestimmter Bedingungen (Kolbenposition, Ausrichtung der Brennkraftmaschine bzw. des Fahrzeuges im Stand, Abstelltemperatur der Brennkraftmaschine) auftretende stärkere Rauchentwicklung beim Start des Fahrzeuges zu vermeiden, ist es aus dieser Patentschrift bekannt, an den Kolbenringnuten Ausnehmungen auszubilden, die bis zum Grund der Ringnut reichen und eine labyrinthartige Passage ausbilden, die über eine Bohrung in der brennraumabgewandten Nut mit dem Kolbeninnenraum verbunden ist. Durch diese Ausnehmungen ist ein Ausgleich des sich in Abhängigkeit von der Kolbenposition einstellenden Druckes im Brennraum mit dem im Kurbelgehäuse bestehenden Umgebungsdruck möglich. Durch diese Passage wird verhindert, daß ein im Brennraum der abgestellten Brennkraftmaschine vorherrschender Druck, der kleiner ist als der Umgebungsdruck, über längere Zeit nach dem Abstellen der Brennkraftmaschine aufrecht erhalten wird und zu einem Ansaugen von Schmiermittel in den Brennraum führt. Dieses eintretende Schmiermittel würde nach dem Wiederanstellen der Brennkraftmaschine verbrannt und zu einer erhöhten Rauchentwicklung führen. Die Ausbildung von Ausnehmungen in allen Kolbenringnuten ist jedoch mit erheblichem Aufwand verbunden. Insbesondere im Bereich der ersten, brennraumnahen Kolbenringnut ist aufgrund der großen Belastungen eine sehr genaue Bearbeitung mit geringen Toleranzen erforderlich. Wird eine derartige Ausnehmung in der ersten Kolbenringnut nach der Endbearbeitung der Ringfläche hergestellt, besteht die erhöhte Gefahr einer Gratbildung am Übergang von der Ausnehmung in den Rand der Ringnut. Wird dagegen die Endbearbeitung der Ringnut nach der Ausbildung der Ausnehmung hergestellt, führt dies zu den an sich bekannten Bearbeitungsproblemen durch die offene Bearbeitungsfläche am Rand der Ausnehmung. Darüber hinaus führt eine derartige Ausnehmung im Bereich des ersten (brennraumnahen) Kolbenringes zu einer unerwünschten Erhöhung der blow-by-Gasrate. Zusätzlich neigt der brennraumzugewandte Teil der Ausnehmung der ersten Kolbenringnut im Betrieb der Brennkraftmaschine dazu, mit Verbrennungsrückständen zu verstopfen. Die angestrebte Verringerung der Ölansaugung in den Brennraum wird damit nach längerer Betriebszeit der Brennkraftmaschine verhindert, gleichzeitig verbleibt jedoch durch die brennraumabgewandte Ausnehmung am ersten Kolbenring eine nicht unwesentliche Erhöhung der blow-by-Gasrate.

Es ist demzufolge die Aufgabe der Erfindung, eine Brennkraftmaschine nach der Gattung des Hauptanspruches mit mindestens einem in Einbaulage der Brennkraftmaschine horizontal ausgerichteten Zylinder so zu verbessern, daß mit geringem Bearbeitungsaufwand eine Verringerung des sogenannten Startblaurauches erreicht wird und gleichzeitig eine möglichst geringe blow-by-Gasrate erhalten bleibt.

Diese Aufgabe wird erfindungsgemäß mit den kennzeichnenden Merkmalen des Hauptanspruches gelöst. Durch die ausnehmungsfreie Ausbildung der ersten (brennraumnahen) Kolbenringnut wird die Abdichtung des Brennraumes gegenüber dem Stand der Technik verbessert, so daß die blow-by-Gasrate deutlich reduziert wird. Gleichzeitig wird durch die abgestimmte Geometrie des Kolbenringes und das im Gegensatz zu herkömmlichen Kolbenringgeometrien relativ große Axialspiel ein Druckausgleich zwischen dem Brennraum und dem Ringraum zwischen dem ersten und dem zweiten Kolbenring ermöglicht. Die zweite und die dritte Kolbenringnut können dann ohne wesentliche Erhöhung der blow-by-Gasrate mit Ausnehmungen versehen werden, durch die eine labyrinthartige Passage gebildet wird, die über Bohrungen vom Grund einer der brennraumabgewandten Ringnuten mit dem Innenraum des Kolbens verbunden ist. Durch diese Ausbildung der Kolbenringe und Kolbenringnuten wird der Bearbeitungsaufwand am Kolben deutlich reduziert. Dabei kann insbesondere die sehr hoch beanspruchte erste Kolbenringnut durchgehend bearbeitet werden, ohne daß aufwendige Kantenbearbeitungen notwendig sind.

Sind in einer Kolbenringnut auf beiden Seiten des Kolbenringes Ausnehmungen ausgebildet, können diese auf vorteilhafte Weise gegenüberliegend angeordnet werden, so daß die Bearbeitung einfacher wird, da beide Ausnehmungen beispielsweise über einen gemeinsamen Bohr- bzw. Fräsvorgang hergestellt werden können.

Ein mögliches Eindringen von Schmiermittel in den Brennraum wird besonders wirkungsvoll verhindert, wenn der von der Brennraumseite zweite Kolbenring gegen Verdrehen gesichert ist. Damit kann sichergestellt werden, daß der Ringstoß des Kolbenringes sich stets in einer oberen Position befindet. Die untere Kolbenlauffläche wird somit sicher abgedichtet, so daß ein Eindringen von Schmiermittel entlang der unteren Wandung bei geneigter Lage des Zylinders wirkungsvoll verhindert wird.

Eine derartige Verdrehsicherung kann auf besonders vorteilhafte Weise durch zumindest abschnittsweises Abwinkeln eines der beiden Ringstöße in axialer oder radialer Richtung erstellt werden, wobei dann der abgewinkelte Abschnitt mit einer Ausnehmung der den Kolbenring aufnehmenden Ringnut zusammenwirkt.

Weitere Vorteile und vorteilhafte Weiterbildungen der Erfindung ergeben sich aus den Unteransprüchen und der Beschreibung.

Ein Ausführungsbeispiel der Erfindung ist in der nachfolgenden Beschreibung und Zeichnung näher erläutert. Letztere zeigt in
- Fig. 1: einen vereinfacht dargestellten Längsschnitt durch einen Zylinder der Brennkraftmaschine,
- Fig. 2: eine vereinfachte Ansicht des Kolbens,
- Fig. 3: eine weitere vereinfachte Ansicht des Kolbens mit einem gegen Verdrehen gesicherten Kolbenring und
- Fig. 4: eine nur teilweise dargestellte Ansicht des Kolbenringes in Richtung des Pfeiles IV nach Fig. 3.

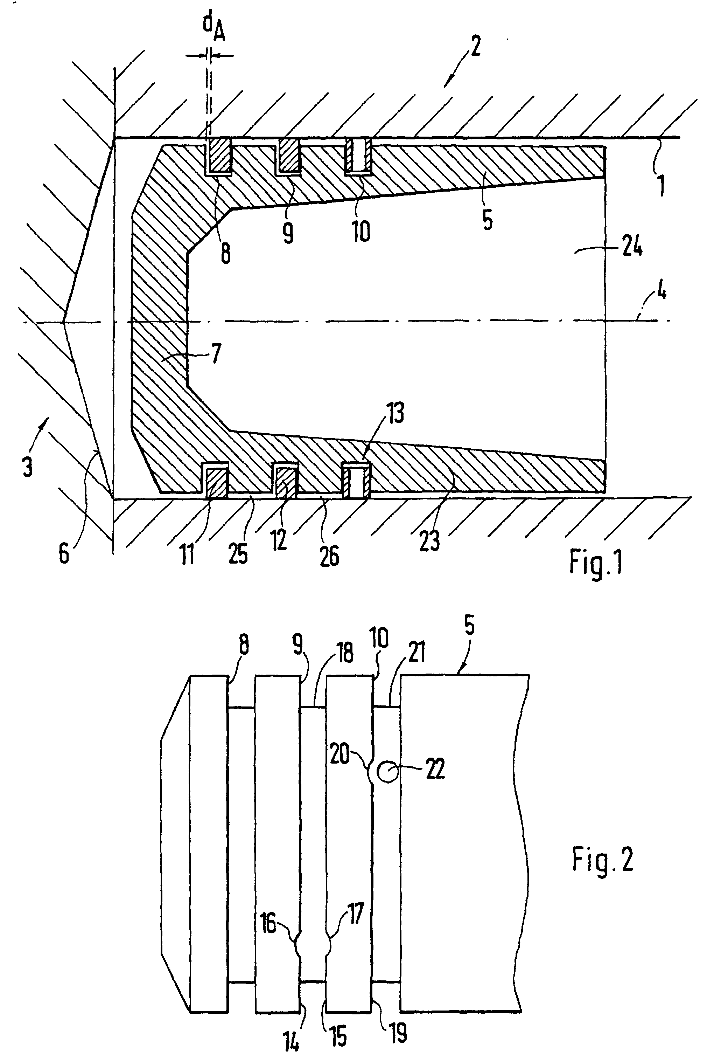

In Fig. 1 ist ein Zylinder 1 einer Brennkraftmaschine vereinfacht dargestellt, der in einem Zylinderblock 2 angeordnet und durch einen Zylinderkopf 3 einseitig verschlossen ist. Die Brennkraftmaschine ist so ausgerichtet, daß die Zylinderachse 4 in Einbaulage der Brennkraftmaschine zumindest annähernd horizontal ausgerichtet ist, d.h. der Winkel zwischen Zylinderachse und der Horizontalen ist kleiner als beispielsweise 20°. Im Inneren des Zylinders 1 ist ein becherförmiger Kolben 5 axial beweglich geführt. Am Umfang des Kolbens 5 sind drei umlaufende Ringnuten ausgebildet, die vom Brennraum 6 zwischen Kolbenboden 7 und Zylinderkopf 2 ausgehend als erste Ringnut 8, zweite Ringnut 9 und dritte Ringnut 10 bezeichnet sind. In den drei Ringnuten 8 bis 10 ist jeweils ein Kolbenring 11 bis 13 angeordnet, dessen Außenseite jeweils an der Zylinderwand anliegt. Der dritte Kolbenring 13 in der brennraumabgewandten dritten Ringnut 10 ist dabei als an sich bekannter dreiteiliger Ölabstreifring ausgebildet. Der erste und zweite Kolbenring 11 und 12 ist jeweils einstückig ausgebildet und mit geringem axialen und radialen Spiel in der jeweiligen Ringnut 8 bzw. 9 geführt. Das Axialspiel d_{A} des ersten (brennraumnahen) Kolbenringes 8 ist im Vergleich zu herkömmlichen Brennkraftmaschinen bzw. Kolben relativ groß und liegt etwa zwischen 50 und 120 µm.

In den Seitenflächen 14 und 15 der zweiten Ringnut 9 sind zwei gegenüberliegende Ausnehmungen 16 und 17 ausgebildet, die jeweils vom Umfang des Kolbens bis zum Grund 18 der Ringnut reichen. Diese Ausnehmungen 16 und 17 können beispielsweise durch Bohren oder Fräsen in radialer Richtung eingebracht werden. Die Ausnehmungen 16 und 17 sind so bemessen, daß sie etwa 2/10 mm in die Seitenfläche 14 bzw. 15 hineinragen. Im Gegensatz zum hier dargestellten Ausführungsbeispiel ist es auch möglich, die Ausnehmungen 16 und 17 nicht gegenüberliegend sondern versetzt zueinander anzuordnen.

In der dritten Ringnut 10 ist in der brennraumnahen Seitenfläche 19 eine weitere Ausnehmung 20 angeordnet. Diese Ausnehmung 20 reicht ebenfalls bis zum Grund 21 der Ringnut 10. Vom Grund 21 der Ringnut 10 geht weiterhin eine radial verlaufende Bohrung 22 aus, die die Kolbenwand 23 durchdringt und eine Verbindung zum Kolbeninnenraum 24 herstellt. Die Bohrung 22 ist in diesem Ausführungsbeispiel so angeordnet, daß sie sich im Bereich der Ausnehmung 20 befindet. Eine versetzte Anordnung der Bohrung 22 zur Ausnehmung 20 ist ebenfalls möglich. Dabei kann die Bohrung auch teilweise über die Ringnut hinausragen und damit selbst eine Ausnehmung ausbilden. Es ist ebenfalls möglich, die Bohrung so groß auszubilden und anzuordnen, daß sie auf beiden Seiten der Ringnut über diese hinausragt. Damit können beim Herstellen der Bohrung gleichzeitig zwei gegenüberliegende Ausnehmungen erstellt werden.

Durch die Ausnehmung 16 ist der Grund 18 der Ringnut 9 mit dem Ringraum 25 verbunden. Dieser Ringraum 25 wird in axialer Richtung durch die beiden benachbarten Kolbenringe 11 und 12 und in radialer Richtung durch die Zylinderwand und die Kolbenwand 23 begrenzt. Der in analoge Weise zwischen dem zweiten und dritten Kolbenring ausgebildete Ringraum 26 ist über die Ausnehmung 17 mit dem Grund 18 der Ringnut 9 und über die Ausnehmung 20 mit dem Grund 21 der Ringnut 10 verbunden.

Durch das relativ große Axialspiel des ersten Kolbenringes 11 in Verbindung mit der ersten Ringnut 8 und durch die Ausnehmungen 16, 17 und 20 ist nach dem Abstellen der Brennkraftmaschine ein Druckausgleich zwischen dem Brennraum 6 und dem nicht dargestellten Kurbelgehäuse der Brennkraftmaschine über die Bohrung 22 möglich. Durch diese labyrinthartige Passage wird gleichzeitig ein Zufließen von Schmiermittel in den Brennraum verhindert. Dies gilt insbesondere, wenn die Ausnehmungen 16 und 17 der mittleren Ringnut 11 mit Abstand zur unteren Zylinderwand (bezogen auf die Einbaulage) angeordnet sind. Dazu können diese Ausnehmungen beispielsweise oberhalb einer durch die Zylinderachse verlaufenden Horizontalebene angeordnet sein.

Ein Zufließen von Schmiermittel in den Brennraum kann darüber hinaus wirkungsvoll verhindert werden, wenn vor allem der mittlere Kolbenring so gegen Verdrehen gesichert ist, daß der Ringstoß ebenfalls in einem höher gelegenen Bereich des Zylinders gehalten wird, so daß auch über den offenen Ringstoß kein bzw. nur sehr wenig Schmiermittei durchtreten kann. Eine derartige Verdrehsicherung kann beispielsweise in Form einer an sich bekannten Ringstoßsicherung vorgenommen werden, bei der ein dünner Stift zwischen den beiden benachbarten Ringstößen radial in eine entsprechende Bohrung am Grund der Ringnut eingepreßt wird. Dieser Stift kann dabei insbesondere im Bereich einer der Ausnehmungen angeordnet sein.

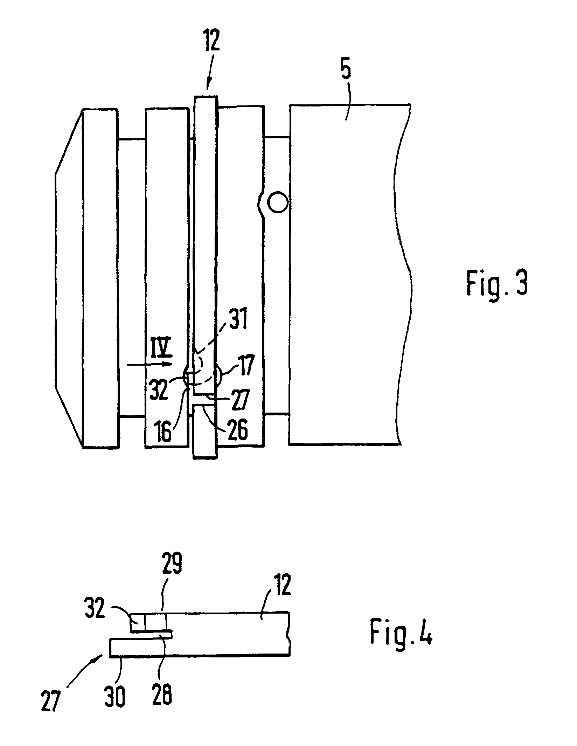

In den Fig. 3 und 4 ist eine andere Form der Verdrehsicherung für den Kolbenring dargestellt, die ohne einen Stift auskommt und daher bei der Montage wesentlich einfacher herzustellen ist. Der in Fig. 3 dargestellte mittlere Kolbenring 12 hat dazu in einem der beiden Ringstöße 26 bzw. 27 einen etwa mittig angeordneten Einschnitt 28, durch den ein innerer und ein äußerer Ringstoßabschnitt 29, 30 gebildet werden. Der innere Ringstoßabschnitt 29 ist an einer Stirnseite mit einer Abflachung 31 versehen. Das abgeflachte freie Ende 32 des inneren Ringstoßabschnittes ist etwa rechtwinkelig abgewinkelt und ragt in die Ausnehmung 16. Durch das in die Ausnehmung ragende abgewinkelte freie Ende 32 des inneren Ringstoßabschnittes wird ein Verdrehen des Kolbenringes verhindert. Die Abflachung 31 kann beispielsweise durch einen Fräsvorgang erstellt werden. Durch diese örtliche Reduzierung der Ringhöhe wird das Abwinkeln bzw. Umbiegen erleichtert. Dadurch können auch einstückige und vor allem dickwandige Kolbenringe entsprechend umgeformt werden, ohne daß eine erhöhte Bruchgefahr während des Biegevorganges oder im Betrieb der Brennkraftmaschine auftritt.

## Patentansprüche

1. Brennkraftmaschine mit mindestens einem Zylinder (1), dessen Zylinderachse (4) in Einbaulage zumindest annähernd horizontal verläuft, mit einem Kolben (5) mit mindestens drei Ringnuten (8 bis 10) zur Aufnahme jeweils eines Kolbenringes (11 bis 13) mit wenigstens annähernd rechteckigem Querschnitt, mit Ringräumen (25, 26) zwischen jeweils zwei benachbarten Kolbenringen, wobei an mindestens zwei Ringnuten Ausnehmungen (16, 17, 20) ausgebildet sind, die den Grund (18, 21) der jeweiligen Ringnut mit einem der angrenzenden Ringräume verbindet und mit mindestens einer Bohrung (22), die den Grund (21) einer brennraumfernen Ringnut (10) mit dem Koibeninnenraum (24) verbindet, **dadurch gekennzeichnet, daß** die brennraumnahe Ringnut (8) frei von Ausnehmungen ist, und daß zwischen der brennraumnahen Ringnut und dem darin angeordneten Kolbenring (11) ein Axialspiel d_{A} von mindestens 50µm ausgebildet ist.

2. Brennkraftmaschine nach Anspruch 1, **dadurch gekennzeichnet, daß** die Bohrung in der brennraumfernsten Ringnut (10) angeordnet ist, und daß die Bohrung in eine Ausnehmung (20) übergeht.

3. Brennkraftmaschine nach Anspruch 2, **dadurch gekennzeichnet, daß** die Bohrung (22) auf der brennraumfernen Seite der Ringnut (10) ausgebildet ist.

4. Brennkraftmaschine nach Anspruch 3, **dadurch gekennzeichnet, daß** der Bohrung (22) eine Ausnehmung (20) in der brennraumnahen Seite (19) der Ringnut (10) gegenüberliegt.

5. Brennkraftmaschine nach einem der vorangehenden Ansprüche, **dadurch gekennzeichnet, daß** der Kolben genau drei Ringnuten (8 bis 10) aufweist, und daß in der mittleren Ringnut (9) auf deren brennraumnaher und brennraumferner Seite (14, 15) jeweils Ausnehmungen (16, 17) ausgebildet sind.

6. Brennkraftmaschine nach Anspruch 5, **dadurch gekennzeichnet ,daß** die Ausnehmungen (16, 17) einander gegenüberliegen.

7. Brennkraftmaschine nach einem der vorangehenden Ansprüche, **dadurch gekennzeichnet, daß** zumindest einer der Kolbenringe (8 bis 10) durch eine Ringstoßsicherung gegen Verdrehen gesichert ist.

8. Brennkraftmaschine nach Anspruch 7, **dadurch gekennzeichnet, daß** die Ringstoßsicherung in Form eines zwischen die beiden Ringstöße des Kolbenringes angeordneten Stiftes ausgebildet ist, der in eine radiale Bohrung am Grund der Ringnut eingesetzt ist.

9. Brennkraftmaschine nach Anspruch 8, **dadurch gekennzeichnet, daß** die radiale Bohrung zur Aufnahme des Stiftes in eine Ausnehmung übergeht.

10. Brennkraftmaschine nach Anspruch 7, **dadurch gekennzeichnet, daß** die Ringstoßsicherung in Form eines abgewinkelten Abschnittes (32) eines der Ringstöße (27) des Kolbenringes ausgebildet ist, der in eine Vertiefung (16) an der aufnehmenden Ringnut ragt.

11. Brennkraftmaschine nach Anspruch 9, **dadurch gekennzeichnet, daß** zumindest einer der beiden Ringstöße (27) mit einem etwa mittig und tangential verlaufenden Einschnitt (28) versehen ist, durch den ein innerer und eine äußerer Ringstoßabschnitt (29, 30) gebildet werden, und daß einer der Ringstoßabschnitte abgewinkelt ist.

12. Brennkraftmaschine nach Anspruch 11, **dadurch gekennzeichnet, daß** der innere Ringstoßabschnitt axial umgebogen ist.

13. Brennkraftmaschine nach Anspruch 11 oder 12, **dadurch gekennzeichnet, daß** der abgewinkelte Ringstoßabschnitt in eine Ausnehmung der Ringnut ragt.

14. Brennkraftmaschine nach einem der Ansprüche 10 bis 13, **dadurch gekennzeichnet, daß** der abgewinkelte Ringstoßabschnitt im Bereich der Abwinklung eine verringerte Ringhöhe aufweist.

## Claims

1. An internal-combustion engine with at least one cylinder (1), the axis (4) of which extends at least substantially horizontally in the fitted position, with a piston (5) with at least three annular grooves (8 to 10) for receiving one respective piston ring (11 to 13) of at least substantially rectangular cross-section, with annular spaces (25, 26) between two respective adjacent piston rings, wherein recesses (16, 17, 20) are formed on at least two annular grooves, the recesses (16, 17, 20) connecting the base (18, 21) of the respective annular groove to one of the adjacent annular spaces, and with at least one bore (22) connecting the base (21) of an annular groove (10) remote from the combustion chamber to the interior (24) of the piston, **characterized in that** the annular groove (8) close to the combustion chamber is free of recesses, and an axial clearance **d**_{**A**} of at least 50 µm is formed between the annular groove close to the combustion chamber and the piston ring (11) arranged therein.

2. An internal-combustion engine according to Claim 1, **characterized in that** the bore is situated in the annular groove (10) furthest from the combustion chamber, and the bore passes into a recess (20).

3. An internal-combustion engine according to Claim 2, **characterized in that** the bore (22) is formed on the side of the annular groove (10) remote from the combustion chamber.

4. An internal-combustion engine according to Claim 3, **characterized in that** the bore (22) has opposite it a recess (20) in the side (19) of the annular groove (10) close to the combustion chamber.

5. An internal-combustion engine according to one of the preceding Claims, **characterized in that** the piston has precisely three annular grooves (8 to 10), and recesses (16, 17) are formed in each case on the sides (14, 15) of the middle annular groove (9) close to the combustion chamber and remote from the combustion chamber.

6. An internal-combustion engine according to Claim 5, **characterized in that** the recesses (16, 17) are opposite one another.

7. An internal-combustion engine according to one of the preceding Claims, **characterized in that** at least one of the piston rings (11 to 13) is prevented from rotating by a ring-joint lock.

8. An internal-combustion engine according to Claim 7, **characterized in that** the ring-joint lock is constructed in the form of a pin arranged between the two ring joints of the piston ring and inserted into a radial bore at the base of the annular groove.

9. An intemal-combustion engine according to Claim 8, **characterized in that** the radial bore for receiving the pin passes into a recess.

10. An internal-combustion engine according to Claim 7, **characterized in that** the ring-joint lock is constructed in the form of an angled portion (32) of one of the ring joints (27) of the piston ring, which projects into a depression (16) on the receiving annular groove.

11. An internal-combustion engine according to Claim 9, **characterized in that at** least one of the two ring joints (27) is provided with an indentation (28) which extends substantially centrally and tangentially and by which an inner and an outer ring-joint portion (29, 30) are formed, and one of the ring-joint portions is angled.

12. An internal-combustion engine according to Claim 11, **characterized in that** the inner ring-joint portion is bent over axially.

13. An internal-combustion engine according to Claim 11 or 12, **characterized in that** the angled ring-joint portion projects into a recess in the annular groove.

14. An internal-combustion engine according to one of Claims 10 to 13, **characterized in that** the angled ring-joint portion has a reduced annular height in the region of the angled shape.

## Revendications

1. Moteur à combustion interne comportant au moins un cylindre (1) dont l'axe (4) s'étend approximativement horizontalement en position montée, comportant un piston (5) avec au moins trois rainures de segment (8 à 10) destinées à recevoir chacune un segment de piston (11 à 13) de section transversale au moins approximativement rectangulaire, avec des espaces de segment (25, 26) entre deux segments de piston voisins, sur au moins deux rainures de segment étant formés des évidements (16, 17, 20) qui relient le fond (18, 21) de la rainure de segment respective à l'un des espaces de segment adjacents et comportant au moins un perçage (22) qui relie le fond (21) d'une rainure de segment (10) éloignée de la chambre de combustion, au volume intérieur du piston, **caractérisé en ce que** la rainure de segment (8) proche de la chambre de combustion, ne présente pas d'évidement, et **en ce qu'**un jeu axial (d_{A}) d'au moins 50 µm est formé entre la rainure de segment proche de la chambre de combustion et le segment de piston (11) disposé à l'intérieur.

2. Moteur à combustion interne selon la revendication 1, **caractérisé en ce que** le perçage est pratiqué dans la rainure de segment (10) la plus éloignée de la chambre de combustion, et **en ce que** le perçage se prolonge par un évidement (20).

3. Moteur à combustion interne selon la revendication 2, **caractérisé en ce que** le perçage (22) est formé sur le côté éloigné de la chambre de combustion de la rainure de segment (10).

4. Moteur à combustion interne selon la revendication 3, **caractérisé en ce qu'**au perçage (22) fait face un évidement (20) sur le côté (19), proche de la chambre de combustion, de la rainure de segment (10).

5. Moteur à combustion interne selon l'une des revendications précédentes, **caractérisé en ce que** le piston comporte exactement trois rainures de segment (8 à 10), et **en ce que** dans la rainure de segment centrale (9), des évidements (16, 17) sont formés respectivement sur le côté (14) proche de la chambre de combustion et le côté (15) éloigné de la chambre de combustion.

6. Moteur à combustion interne selon la revendication 5, **caractérisé en ce que** les évidements (16, 17) se font face l'un l'autre.

7. Moteur à combustion interne selon l'une des revendications précédentes, **caractérisé en ce qu'**au moins l'un des segments de piston (8 à 10) est bloqué en rotation par une sûreté de joint de segment.

8. Moteur à combustion interne selon la revendication 7, **caractérisé en ce que** la sûreté de joint de segment est réalisée sous la forme d'une cheville, disposée entre les deux joints du segment de piston, qui est insérée dans un trou radial sur le fond de la rainure de segment.

9. Moteur à combustion interne selon la revendication 8, **caractérisé en ce que** le trou radial destiné à recevoir la cheville se prolonge par un évidement.

10. Moteur à combustion interne selon la revendication 7, **caractérisé en ce que** la sûreté de joint de segment est réalisée sous la forme d'une portion coudée (32) de l'un des joints (27) du segment de piston, qui s'engage dans un renfoncement (16) de la rainure de segment de réception.

11. Moteur à combustion interne selon la revendication 9, **caractérisé en ce qu'**au moins l'un des deux joints de segment (27) est pourvu d'une entaille (28), qui s'étend approximativement au milieu et tangentiellement, et qui forme une portion intérieure et une portion extérieure (29, 30) du joint de segment, et **en ce que** l'une des portions du joint de segment est coudée.

12. Moteur à combustion interne selon la revendication 11, **caractérisé en ce que** la portion intérieure du joint de segment est repliée axialement.

13. Moteur à combustion interne selon la revendication 11 ou 12, **caractérisé en ce que** la portion coudée du joint de segment s'engage dans un évidement de la rainure de segment.

14. Moteur à combustion interne selon l'une des revendications 10 à 13, **caractérisé en ce que** la portion coudée du joint de segment présente une hauteur de segment réduite, dans la zone du coude.
